# EUROPÄISCHE PATENTSCHRIFT

(11) **EP 1 862 209 B1**
(45) Veröffentlichungstag und Bekanntmachung des Hinweises auf die Patenterteilung: **22.09.2010**
(21) Anmeldenummer: 07107187.2
(22) Anmeldetag: 30.04.2007
(51) Int. Cl.: B01D 46/52

(54) **Axial durchströmbares Filterelement**
Filter element with axial flow
Elément de filtre à écoulement axial

(30) Priorität: 29.05.2006 DE 102006025235
(43) Veröffentlichungstag der Anmeldung: 05.12.2007
(73) Patentinhaber: MANN+HUMMEL GmbH, 71638 Ludwigsburg (DE)
(72) Erfinder: Rieger, Mario, 71691, Freiberg (DE); Blossey, Werner, 71726, Benningen (DE)

(56) Entgegenhaltungen:
- WO-A-2004/082795
- WO-A-2006/093960
- US-A1- 2002 185 007

## Beschreibung

### Technisches Gebiet

Die Erfindung betrifft eine Luftfiltereinheit, bestehend aus wenigstens einem Gehäuse und einem Flächenelement, das zu einem kompakten Körper gewickelt ist, welcher zwischen seinen zwei Stirnflächen axial durchströmbar ist, und das an seinem Außenumfang wenigstens einen endlosen Hauptdichtring aufweist, der benachbart zu der ansaugseitigen Stirnfläche angeordnet ist.

### Stand der Technik

Das Dokument US2002/185007A1 zeigt eine Filteranordnung mit einen Gehäuse und einem darin angeordneten, axial durchströmten Kompaktluftfilterelement. Ein erstes Dichtungselement am Kompaktluftfilter bildet eine radiale Dichtung mit dem Gehäuse während ein zweites Dichtungselement eine axiale Dichtung mit dem Gehäuse bildet.
Aus der DE 32 49 151 C2 ist ein Kompaktluftfilterelement bekannt. Dieses besteht aus einem gewellten oder plissierten und einem glatten Filterpapier. Die Filterpapiere sind miteinander verklebt und dann miteinander zu einem Filterelement der gewünschten Größe aufgewickelt. Dabei erfolgt die Verklebung durch streifenförmigen Auftrag im Kantenbereich derart, dass die Zwischenräume zwischen der gewellten und der glatten Lage abwechselnd an den beiden Stirnseiten verschlossen sind, sodass keine direkte Strömung durch die zwischen den Filterpapieren gebildeten Kanäle möglich ist. Eine Fluidströmung, insbesondere von einer Brennkraftmaschine angesaugte Luft, gelangt von der Rohluft- zur Reinluftseite zunächst nur in einen Stichkanal hinein, dann durch das Filterpapier hindurch und aus einem Stichkanal auf der anderen Seite wieder heraus. Gegenüber herkömmlichen Faltenfiltern haben diese Kompaktluftfilter den Vorteil, bei gleicher Baugröße eine größere Filterfläche zu bieten bzw. bei gleicher Filterfläche eine kleinere Baugröße zu ermöglichen.

Während bei Rundfiltern, bei denen die Ansaugseite, die sogenannte Rohluftseite, am Außenumfang liegt, die bei einer Beschädigung des Filtergehäuses angesaugte Außenluft dennoch das Filtermedium passieren muss, besteht bei axial durchströmbaren Filtern, das Problem, dass eine Überbrückung des Filterelements und damit ein Eintritt schmutzbefrachteter Rohluft in einen nachgeschalteten Verbrennungsmotor auftreten, wenn z.B. infolge Steinschlags bei einem außen liegenden Filtergehäuse eines Nutzfahrzeugs oder wegen eines herab fallenden Werkzeugs das Luftfiltergehäuse beschädigt wird. Da Kompaktluftfilter üblicherweise in einem Bereich nahe an einer Stirnseite einen umlaufenden Dichtungskragen angeformt haben, durch welchen die Rohluft- von der Reinluftseite getrennt wird, liegt der größere Teil der Länge des Kompaktluftfilterelements reinluftseitig im Gehäuse. Wird das Gehäuse beschädigt, so kann Schmutz ungehindert durch den Zwischenraum zwischen Gehäuse und Luftfilterelement hindurch zum Reinluftanschluss strömen, was zur Beschädigung eines nachgeschalteten Verbrauchers, etwa einer Brennkraftmaschine, führen kann.

### Offenbarung der Erfindung

Eine Aufgabe der Erfindung liegt somit darin, bei einer Luftfiltereinheit der eingangs genannten Art das Einströmen von Schmutz befrachteter Luft im Falle einer Beschädigung des Luftfiltergehäuses zu verhindern.

Diese Aufgabe wird durch einen zusätzlichen Notdichtkragen gelöst, der das Luftfilterelement umseitig umgibt, der axial beabstandet zum Hauptdichtring bei der Auslassseite angeordnet ist und der eine solche Höhe besitzt, dass er den Spalt zwischen dem Kompaktluftfilterelement und einer Gehäuseinnenwand eines Luftfiltergehäuses vollständig auszufüllen vermag. Er kann insbesondere leicht vorkomprimiert in dem Spalt angeordnet sein, um eine gute Dichtwirkung zu erzielen.

Ein weiterer Vorteil besteht darin, dass das einseitig eingespannte Luftfilterelement über den beispielsweise als Vlies- oder Schaumstoffstreifen ausgebildeten Notdichtkragen zusätzlich am Gehäuse abgestützt ist. Die mechanische Belastung des nach dem Stand der Technik nur einseitig eingespannten Luftfilterelements wird reduziert, da durch die zusätzliche Abstützung am anderen Ende die Biegemomente an der Einspannungsstelle am Hauptdichtring deutlich reduziert sind.

Um im Schadensfall eine gründliche Abscheidung von Partikeln an dem Notdichtkragen zu bewirken, wird die Porosität bevorzugt so gewählt, dass sie gleich dem Filtermedium des Kompaktluftfilterelements oder noch feiner ist.

Reicht hingegen im Notfall die Abscheidung groben Schmutzes aus, so können entsprechend grobporige Vliese oder Schäume verwendet werden. Dies hat den Vorteil, dass der Notdichtkragen teildurchlässig ist und die äußere Oberfläche des Kompaktluftfilterelements auch im Normalbetrieb als durchströmbare Filterfläche zur Verfügung steht.

Vorzugsweise bildet das Filterelement mit einem Gehäuse eine aufeinander abgestimmte Luftfiltereinheit, um zu gewährleisten, dass ein Ringspalt, der zwischen der Außenseite des Filterelements und der Innenseite des Gehäuses gebildet ist, vollständig durch den Hauptdichtring und durch den Notdichtkragen verschlossen ist.

### Kurze Beschreibung der Zeichnungen

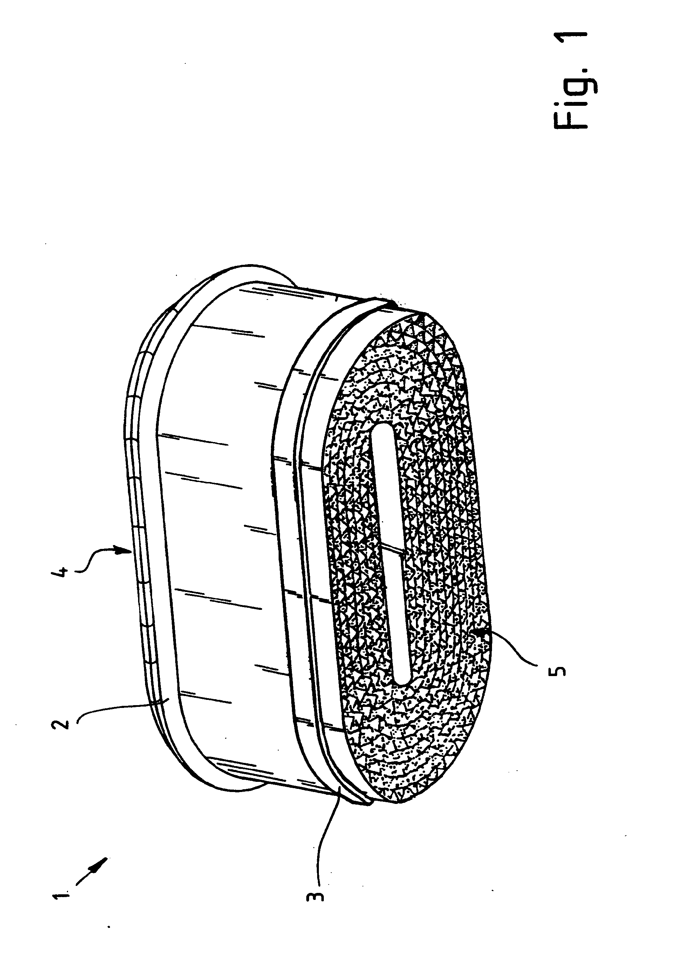

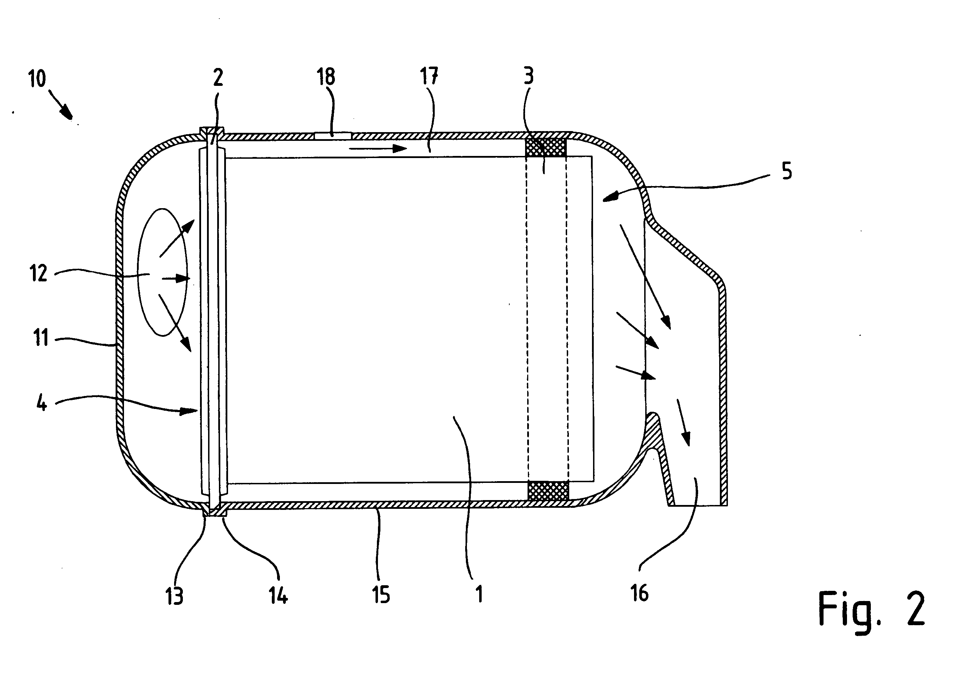

Die Erfindung wird nachfolgend mit Bezug auf die Zeichnung näher erläutert. Die Figuren zeigen: Fig. 1 ein erfindungsgemäßes Luftfilterelement in perspektivischer Ansicht und Fig. 2 eine Luftfiltereinheit mit dem KompaktLuftfilterelement in Schnittansicht.

### Ausführungsform(en) der Erfindung

Figur 1 zeigt in einem perspektivischen Blick ein Luftfilterelement 1. Durch den Blick auf eine hier unten liegende, auslassseitige Stirnfläche 5 ist erkennbar, dass das Filterelement selbst aus einem gewickelten Filtermedium besteht. Erkennbar sind die miteinander verbundene gewellte bzw. plissierte Lage und die glatte Lage. Bei der gezeigten Ausführungsform ist im Zentrum ein Wickelkern vorhanden, der abgedichtet ist, so dass keine direkte Strömung von einer ansaugseitigen Stirnfläche 4 zur Stirnfläche 5 möglich ist.

Eine Strömung ist nur von der Stirnfläche 4 her in die zwischen der gewellten und der glatten Lage ausgebildeten Kanäle hinein möglich. Diese sind nahe der Kanten an den Stirnflächen lagenweise wechselseitig verschlossen, das heißt, das Fluid gelangt von der Stirnfläche 4 her durch die Kanäle nur bis kurz vor die Stirnfläche 5 und muss dann durch das Filterpapier hindurch strömen, um in einen darüber oder darunter liegenden Kanal zu gelangen, welcher wiederum nahe der Stirnfläche 4 verschlossen und zur Stirnfläche 5 offen ist. Ein elastomerer Dichtkragen 2 ist nahe der Ansaugseite angeformt.

Erfindungsgemäß ist am gegenüberliegenden axialen Ende bzw. in der Nähe davon ein zusätzlicher Notdichtkragen 3 angebracht oder angeformt.

Die Wirkungsweise dieser Ausbildung wird unter Bezug auf Fig. 2 erläutert: In einer Luftfiltereinheit 10 ist durch einen Gehäusetopf 15 und einen Deckel 11 ein geschlossenes Gehäuse ausgebildet, das eine Ansaugöffnung 12 und eine Auslassöffnung 16 aufweist. Zwischen den Öffnungen 12, 16 ist das Luftfilterelement 1 platziert und deckt den gesamten Öffnungsquerschnitt innerhalb des Gehäuses ab. Gehäusetopf 15 und Deckel 11 weisen im Kantenbereich jeweils Flansche 13, 14 auf, die nicht nur eine Kopplung miteinander ermöglichen, sondern auch eine momentensteife Einspannung des Filterelements 1 an seinem kragenförmigen Hauptdichtring 2 bewirken. Mit der Einspannung wird der elastomere Hauptdichtring 2 zwischen den Flanschen 13, 14 verpresst, so dass eine gasdichte Abdichtung bewirkt wird. Eine Strömung von der Ansaugöffnung 12 kann nur an der Stirnfläche 4 in das Filterelement 1 eintreten, dieses durchströmen und von seiner Stirnfläche 5 aus zur Auslassöffnung 16 strömen. Ein Ringspalt 17 zwischen dem Außenumfang des Filterelements 1 und dem Innenumfang des Gehäusetopfes 15 ist durch den Hauptdichtring 2 verschlossen.

Wird das Gehäuse jedoch stromabwärts des Hauptdichtrings 2, also im Bereich des Gehäusetopfes 15, beschädigt, so dass ein Loch 18 in der Gehäusewand entsteht, kann ungefilterte Luft in den Ringspalt 17 angesaugt werden. Durch den erfindungsgemäß vorgesehenen Notdichtkragen 3 ist der Ringspalt 17 vollständig abgedeckt, so dass die Strömung, je nach Porosität des Notdichtkragens 3, von außen in das Filterelement 1 geleitet wird oder aber in dem porös ausgebildeten Notdichtkragen selbst gefiltert wird.

Der Notdichtkragen 3 ist im dargestellten Ausführungsbeispiel als einfacher Ring mit rechteckigem Querschnitt dargestellt. Feiner ausgebildete Profilformen sind möglich, um eine Anpassung an die Innenkontur des Gehäuses der Luftfiltereinheit 10 zu erzielen.

Die Darstellung der Figur 2 zeigt auch, dass das Filterelement 1 aufgrund seiner endseitigen Einspannung an dem Hauptdichtring 2 nahezu über seine gesamte Länge im Gehäusetopf 15 auskragt. Durch den Notdichtkragen 3 werden erfindungsgemäß, je nach der Federsteifigkeit des elastischen Notdichtkragens 3, die an der Einspannstelle auftretenden Biegemomente reduziert.

## Patentansprüche

1. Luftfiltereinheit (10) umfassend ein Gehäuse (11, 15) und ein Filterelement (1) bestehend aus wenigstens einem Flächenelement, das zu einem kompakten Körper gewickelt ist, welcher zwischen seinen zwei Stirnflächen (4, 5) axial durchströmbar ist, und das an seinem Außenumfang wenigstens einen endlosen Hauptdichtring (2) aufweist, der benachbart zu einer ansaugseitigen Stirnfläche (4) angeordnet ist, wobei nahe der auslassseitigen Stirnfläche (5) ein den Körper umfassender Notdichtkragen (3) vorgesehen ist, **dadurch gekennzeichnet, dass** ein zwischen der Außenseite des Filterelements (1) und der Innenseite des Gehäuses gebildeter Ringspalt (17) durch den Hauptdichtring (2) und durch den Notdichtkragen (3) verschlossen ist, wobei der Notdichtkragen (3) aus einem Vlies- oder Schaumstoffstreifen besteht und wobei die Porosität des Notdichtkragens (3) so gewählt ist, dass sie gleich dem Filtermedium des Filterelements oder noch feiner ist.

2. Luftfiltereinheit (10) nach Anspruch 1, mit einem Filterelement, **dadurch gekennzeichnet, dass** das gewickelte Flächenelement wenigstens eine Lage glatten Filterpapiers und eine Lage gewellten oder plissierten Filterpapiers umfasst, wobei die Lagen durch pastöse Klebstoffraupen verbunden sind, die lagenweise abwechselnd im Kantenbereich aufgetragen sind.

## Claims

1. Air filter unit (10) comprising a housing (11, 15) and a filter element (1) consisting of at least one surface element which is wound into a compact body that can be flowed through axially between its two end faces (4, 5) and which features at its external circumference at least one endless main gasket ring (2) which is adjacently disposed at an intake-side end face (4), an emergency gasket collar (3) being provided near the exhaust-side end face (5) and encompassing the body, **characterized in that** an annular gap (17) formed between the exterior side of the filter element (1) and the interior side of the housing is closed by the main gasket ring (2) and the emergency gasket collar (3), the emergency gasket collar (3) consisting of a non-woven or foam strip and the porosity of the emergency gasket collar (3) being chosen such that it is the same as for the filter medium of the filter element or even finer.

2. Air filter unit (10) according to claim 1, with a filter element, **characterized in that** the wound surface element comprises at least one layer of smooth filter paper and one layer of corrugated or pleated filter paper, the layers being bonded by paste-like glue fillets which are applied in alternating layers in the area of the edges.

## Revendications

1. Unité de filtre à air (10) comprenant un boîtier (11,15) et un élément filtrant (1), se composant d'au moins un élément de surface enroulé pour former un corps compact, lequel peut être parcouru par un flux en sens axial entre ses deux faces frontales (4, 5), et présentant sur son pourtour au moins un joint d'étanchéité principal sans fin (2) qui est disposé à proximité d'une face frontale côté aspiration, un collet d'étanchéité de secours (3) englobant le corps étant prévu près de la face frontale côté écoulement, **caractérisée en ce qu'**un interstice annulaire (17) formé entre la face extérieure de l'élément filtrant (1) et la face intérieure du boîtier est obturé par le joint d'étanchéité principal (2) et par le collet d'étanchéité de secours (3), le collet d'étanchéité de secours (3) étant composé d'une bande de non tissé ou de mousse et la porosité du collet d'étanchéité de secours (3) étant choisie de telle manière qu'elle soit identique au milieu filtrant de l'élément filtrant ou soit encore plus fine.

2. Unité de filtre à air (10) selon la revendication 1, avec un élément filtrant, **caractérisée en ce que** l'élément de surface enroulé comprend au moins une couche de papier filtre lisse et une couche de papier filtre ondulé ou plissé, les couches étant assemblées par des filets de colle pâteuse qui sont appliqués en couches alternantes au niveau des bords.
